# EUROPÄISCHE PATENTSCHRIFT

(11) **EP 0 753 447 B1**
(45) Veröffentlichungstag und Bekanntmachung des Hinweises auf die Patenterteilung: **19.09.2001**
(21) Anmeldenummer: 96110699.4
(22) Anmeldetag: 03.07.1996
(51) Int. Cl.: B62D 1/18

(54) **Verkleidung einer verstellbaren Lenksäule**
Cover for an adjustable steering column
Habillage pour une colonne de direction réglable

(30) Priorität: 11.07.1995 DE 19525181
(43) Veröffentlichungstag der Anmeldung: 15.01.1997
(73) Patentinhaber: ADAM OPEL AG, 65423 Rüsselsheim (DE)
(72) Erfinder: Polster, Michael, Dipl.-Ing., 65201 Wiesbaden (DE); Rick, Ulrich, Dipl.-Ing., 55595 Roxheim (DE)
(74) Vertreter: Daniel, Ulrich W.P.

(56) Entgegenhaltungen:
- EP-A- 0 304 650
- WO-A-92/04222
- DE-A- 3 221 484
- DE-C- 4 337 721

## Beschreibung

Die Erfindung betrifft eine Verkleidung einer verstellbaren Lenksäule, mit den im Oberbegriff des Patentanspruches 1 angegebenen Merkmalen.

Eine derartige Verkleidung ist aus der DE 43 37 721 C1 bekannt, bei der ein biegsames Abdeckelement den veränderlichen Spalt zwischen der Lenksäule bzw. einem damit verbundenen Verkleidungsteil und einem gegenüberliegenden Teil des Armaturenträgers überdeckt, wobei das Abdeckelement im Bereich des Spaltes eine Schleife bildend an einem Endbereich mit der Lenksäule bzw. mit dem Verkleidungsteil und am anderen Endbereich mit dem Teil des Armaturenträgers verbunden ist. Die Schleife ist bereichsweise zum Fahrzeuglenker konkav gekrümmt ausgebildet, wodurch sich das Abdeckelement an die Verstellbewegungen der Lenksäule anpassen kann. Die im Bereich der konkaven Krümmung durch die elastische Verformung des Abdeckelements verursachten Biegespannungen halten das Abdeckelement ausreichend formstabil, so daß keine Spanneinrichtung, wie beispielsweise in der EP 0 304 650 A1 dargestellt, für das montierte Abdeckelement notwendig ist.

Nachteilig bei dieser Lösung ist jedoch der herstellungstechnische und konstruktive Aufwand sowie die daraus resultierende umständliche Montage des Abdeckelements sowohl am Armaturenträger als auch am Verkleidungsteil, wonach das Abdeckelement an einem Endbereich mit einem Teil des Armaturenträgers verklebt und am anderen Endbereich am Verkleidungsteil mittels eines verdeckt angeordneten Bügels befestigt werden muß. Außerdem ist das Abdeckelement im nicht montierten Zustand nicht ausreichend formstabil, wodurch Lagerung, Transport und Vormontage zusätzlich erschwert sind.

Eine weitere Verkleidung dieser Art ist aus der WO 92/04222 A bekannt, die eine im Bereich zwischen einem verstellbaren Lenkrad einer Lenksäule und einer Wand einer Armaturentafel angeordnete elastische Verkleidung beschreibt. Diese Verkleidung weist eine rotationssymmetrische Form auf und wird vor der Anbringung des Lenkrades an der Lenksäule montiert. Dabei wird ein Ende der Verkleidung am Schaft der Lenksäule und das andere Ende an einem im Bereich der Wand der Armaturentafel angeordneten und mit der Lenksäule verbundenen Flansch befestigt. Bei dieser Lösung ist somit keine Befestigung der Verkleidung an der Armaturentafel vorgesehen. Bei der Montage der Lenksäule im Kraftfahrzeug wird lediglich das am Flansch befestigte Ende der Verkleidung zur Anlage mit der Wand der Armaturentafel gebracht.

Aufgabe der vorliegenden Erfindung ist es, eine gattungsgemäße Verkleidung für eine verstellbare Lenksäule zu schaffen, welche mit verringertem Herstellungsaufwand eine einfache Montage am Kraftfahrzeug ermöglicht.

Diese Aufgabe wird erfindungsgemäß durch die im Kennzeichen des Patentanspruches 1 angegebenen Merkmale gelöst.

Ein wesentlicher Vorteil dieser Lösung besteht darin, daß das in sich formstabile Abdeckteil in einem Stück aus elastischem Material hergestellt bzw. gegossen werden kann. Die lösbare Befestigung an der Armaturentafel bzw. am Verkleidungsteil ermöglicht weiterhin die Montage des Abdeckteils wesentlich zu vereinfachen, da die Befestigungsmittel im Abdeckteil integriert sind.

Zur spielfreien Abdeckung des Spaltes ist gemäß einer vorteilhaften Ausführung der Erfindung vorgesehen, daß das Abdeckteil mit seinen Rändern an die jeweilige Kontur der Armaturentafel und/oder des Halteteils sowie des Verkleidungsteils angepaßt ist, wobei die Ränder steifer als der dazwischen liegende Bereich ausgebildet sind. Dabei tragen die steifen Ränder zur Formstabilität des Abdeckteils bei, während der zwischen den Rändern liegende flexible Bereich die Verstellung der Lenksäule in axialer Richtung und/oder in der Höhe ermöglicht. Ein derartig ausgebildetes Abdeckteil ist besonders zur Anwendung bei Kraftfahrzeugen geeignet, bei welchen die Drehachse des schwenkbaren (winkelverstellbaren) Bereiches der Lenksäule nahe dem Spalt oder im Bereich des Spaltes liegt.

Die lösbare Befestigung des Abdeckteils kann durch form- und/oder kraftschlüssig ineinandergreifende Mittel, vorzugsweise Rastmittel, gebildet sein. Nach einer bevorzugten Ausführung sind diese Mittel durch zumindest eine umlaufende oder bereichsweise am Abdeckteil angeordnete U-förmige Nut mit elastischen Schenkeln gebildet, welche zumindest auf die Befestigungsränder einer Aussparung an der Armaturentafel selbsthaftend oder rastend aufsteckbar ist. Die Ränder des Abdeckteils können dabei mit einer wulstartigen Verdickung versehen sein, in der sich die Nut befindet. Die wulstartige Verdickung kann auch zur Erhöhung der Formstabilität eine Einlage aus Kunststoff oder Metall enthalten.

Gemäß einer alternativen Ausführungsform des Abdeckteils kann sich die Nut in einer mit dem elastischen Bereich des Abdeckteils verbundenen Profilleiste befinden. Die Verbindung der Profilleiste mit dem elastischen Bereich kann beispielsweise durch Klemmen, Kleben oder Schweißen erfolgen. Wichtig dabei ist, daß die Profilleiste spielfrei an die entsprechende Kontur der Armaturentafel bzw. des Verkleidungsteils angepaßt ist.

Zur Abdeckung eines relativ großen Spaltes oder bei Lenksäulen mit einem großen Verstellweg ist besonders vorteilhaft, wenn der zwischen den Rändern des Abdeckteils liegende flexible Bereich als Faltenbalg ausgebildet ist. Der Faltenbalg kann dabei einstückig mit den Rändern ausgebildet oder mit diesen ebenfalls durch Klemmen, Kleben oder Schweißen verbunden sein.

Die Verkleidung der Lenksäule kann gemäß einer bevorzugten Ausführung der Erfindung zwei schalenförmige, die Lenksäule umschließende Verkleidungsteile aufweisen, welche lösbar mit dem Abdeckteil verbunden sind. Die Ränder der Verkleidungsteile sind derart ausgebildet, daß sie zur lösbaren Verbindung mit dem Abdeckteil in die Nut des Abdeckteils bzw. der Profilleiste selbsthaftend oder rastend einsteckbar sind. Dadurch ist das Abdeckteil im Bereich des Spaltes mit seinem einen Rand an der Armaturentafel und mit seinem anderen Rand an den Verkleidungsteilen festgehalten.

Das Abdeckteil kann in einer alternativen Ausführungsform einseitig an der Armaturentafel befestigt sein und einen sich in axialer Richtung der Lenksäule erstreckenden Verstellbereich sowie einen daran anschließenden, etwa senkrecht abgebogenen Rand aufweisen, welchen die schalenförmigen Verkleidungsteile im befestigten Zustand umgreifen. Dazu sind die schalenförmigen Verkleidungsteile an der Verbindungsstelle (im Verstellbereich) auch mit jeweils einem umlaufenden, etwa senkrecht abgebogenen Rand ausgebildet, welcher zum Abdeckteil hin gerichtet ist. Eine derartige Ausführung der Verkleidung ist einfach in der Herstellung und kann besonders bei überwiegend axial verstellbaren Lenksäulen verwendet werden.

Die lösbare Befestigung des Abdeckteils an der Armaturentafel ist besonders einfach, wenn die Aussparung an der Armaturentafel zu einer Seite hin offen ausgebildet und das Abdeckteil von dieser Seite her auf die Befestigungsränder der Aussparung aufsteckbar ist. Diese offene Seite kann beispielsweise durch ein an der Armaturentafel zur Befestigung von Anzeigeinstrumenten vorgesehenes Halteteil verschlossen sein, an dem ein Befestigungsrand zur lösbaren Verbindung mit dem Abdeckteil vorgesehen ist. Bei der Montage kann somit das Halteteil mit dem Befestigungsrand in die Nut des Abdeckteils spielfrei eingreifen.

Die Erfindung läßt zahlreiche Ausführungsformen zu. Zur weiteren Verdeutlichung ihres Grundprinzips sind einige davon in der Zeichnung dargestellt und nachfolgend beschrieben. Die Zeichnung zeigt teilweise schematisch in
- Fig. 1: eine Armaturentafel eines Kraftfahrzeuges mit einer Verkleidung für eine nicht dargestellte Lenksäule, im nicht montierten Zustand;
- Fig. 2: eine Verkleidung gemäß Fig. 1, teilweise geschnitten, im befestigten Zustand;
- Fig. 3: eine Verkleidung gemäß Fig. 2, mit einer alternativen Ausbildung des Abdeckteils;
- Fig. 4: eine Verkleidung gemäß Fig. 1, mit einer weiteren Ausbildungsform des Abdeckteils, im befestigten Zustand.

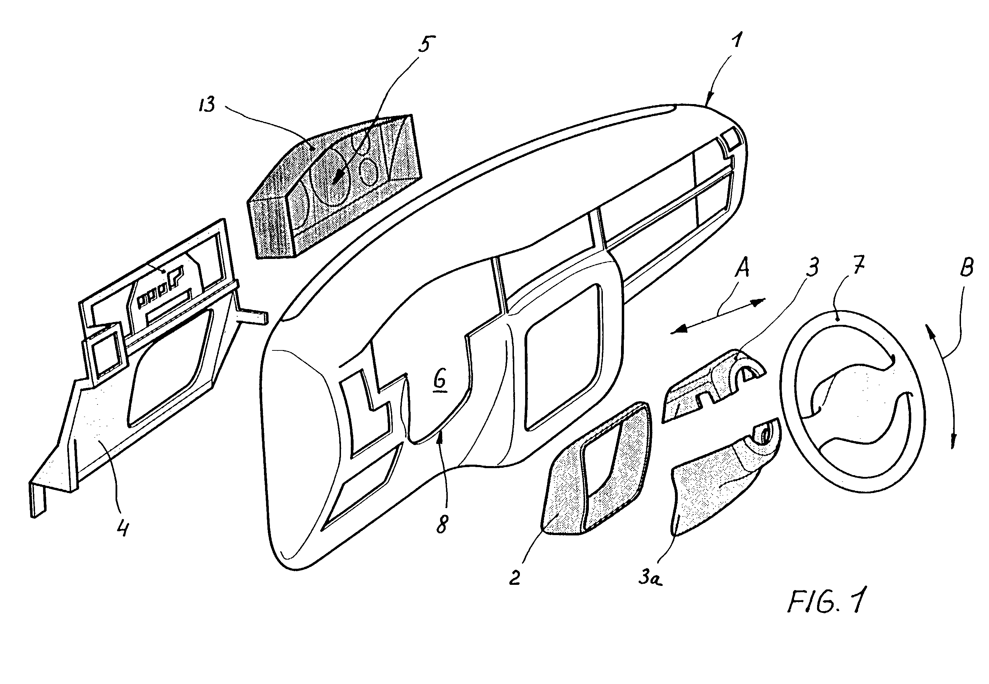

Fig. 1 zeigt eine Armaturentafel 1 eines Kraftfahrzeuges sowie wesentliche Teile einer Verkleidung einer bis auf das Lenkrad 7 nicht dargestellten Lenksäule im nicht montierten Zustand. Weiterhin zeigt die Fig. 1 ein Halteteil 4 für Anzeigeinstrumente 5, welche an einer Aussparung 6 montiert werden. Im montierten Zustand ist die Lenksäule im Kraftfahrzeug so eingebaut, daß sie die Aussparung 6 in der Armaturentafel 1 durchdringt und in axialer Richtung (Pfeile A) sowie in der Höhe (Pfeile B) verstellbar ist. Bei der Verstellung der Lenksäule in der Höhe (Pfeile B) schwenkt der verstellbare Bereich der Lenksäule mit dem Lenkrad 7 um eine nicht dargestellte, nahe der Aussparung 6 befindliche Drehachse. Der verstellbare Bereich der Lenksäule ist gegenüber dem Innenraum des Kraftfahrzeuges durch die Verkleidung abgedeckt.

Die Verkleidung weist am lenkradnahen verstellbaren Bereich der Lenksäule zwei schalenförmige, die Lenksäule umhüllende und mit dieser verbundene Verkleidungsteile 3, 3a auf, welche bei der Verstellung der Lenksäule mitverstellt werden. Zur Überdeckung eines nicht dargestellten, veränderlichen und sich überwiegend in Längsrichtung des Kraftfahrzeuges erstreckenden Spaltes zwischen der Armaturentafel 1 und der Lenksäule bzw. den Verkleidungsteilen 3, 3a ist ein Abdeckteil 2 vorgesehen, welches sowohl mit der Armaturentafel 1 als auch mit den Verkleidungsteilen 3, 3a lösbar verbunden ist.

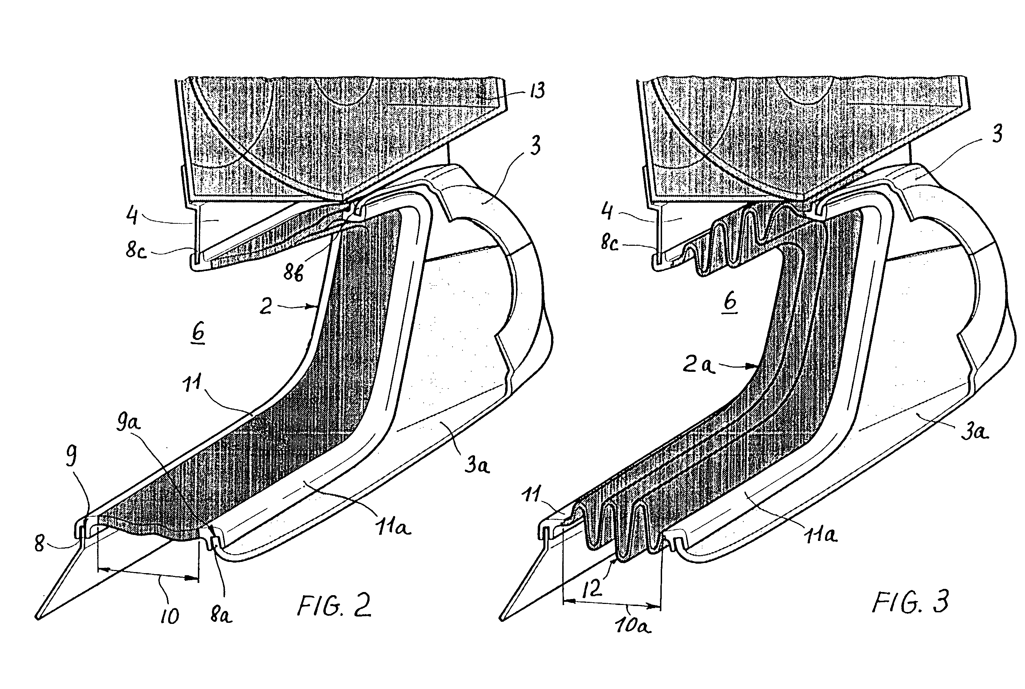

Zur lösbaren Verbindung des Abdeckteils 2 mit der Armaturentafel 1 ist, wie in Fig. 2 dargestellt, am Abdeckteil 2 eine Nut 9 vorgesehen, welche im Bereich der Aussparung 6 auf einen Befestigungsrand 8 der Armaturentafel 1 aufgesteckt ist. Die lösbare Befestigung des Abdeckteils 2 mit den Verkleidungsteilen 3, 3a erfolgt auf ähnliche Weise, indem das Abdeckteil 2 mittels einer Nut 9a auf die entsprechenden Ränder 8a, 8b der Verkleidungsteile 3, 3a aufgesteckt ist. Im dargestellten Beispiel weist das Abdeckteil 2 einen elastischen Bereich 10 auf, dessen Ränder mit umlaufenden Profilleisten 11, 11a verbunden sind. Die Profilleisten 11, 11a sind dabei mit jeweils einer ebenfalls umlaufenden Nut 9, 9a ausgebildet und im Bereich des Spaltes an die jeweilige Kontur der Armaturentafel 1 bzw. der Verkleidungsteile 3, 3a angepaßt.

Die Aussparung 6 ist, wie in Fig. 1 dargestellt, nach oben hin offen ausgebildet. Bei der Montage des Abdeckteils 2 an der Armaturentafel 1 wird das Abdeckteil 2 von oben her in die Aussparung 6 eingesetzt. Die nach oben offene Seite der Aussparung 6 wird dabei dichtend durch das Halteteil 4 für Anzeigeinstrumente 5 verschlossen. Dazu ist das Halteteil 5, wie aus Fig. 2 ersichtlich, mit einem Befestigungsrand 8c ausgebildet, welcher auf die umlaufende Nut 9 aufgesteckt ist.

Fig. 3 zeigt eine alternative Ausbildung des Abdeckteils 2a mit einem flexiblen Bereich 10a, im befestigten Zustand, wobei der flexible Bereich 10a als ein im Querschnitt wellenförmiger Faltenbalg 12 ausgebildet ist. Der Faltenbalg 12 ist mit den Profilleisten 11, 11a verbunden und kann einen relativ großen Spalt zwischen der Armaturentafel 1 und den Verkleidungsteilen 3, 3a, welcher bei Lenksäulen mit relativ großen Verstellwegen in der axialen Richtung und in der Höhe auftreten kann, überbrücken.

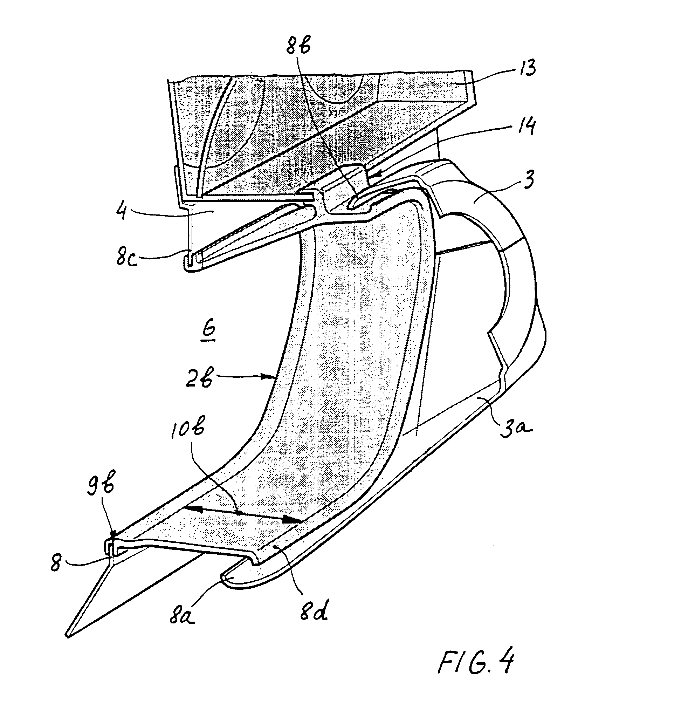

Bei der Ausführungsform der Verkleidung nach Fig. 4 ist ein einstückig aus einem relativ elastischen Material, beispielsweise Kunststoff, hergestelltes Abdeckteil 2b überwiegend zum Ausgleich von axialen Verstellbewegungen der Lenksäule ausgebildet. Dieses Abdeckteil 2b ist einseitig an der Armaturentafel 1 lösbar befestigt, wobei am Abdeckteil 2b ein weiterer Befestigungspunkt 14 zur lösbaren Verbindung mit einem Gehäuse 13 der Anzeigeinstrumente 5 vorgesehen ist. Das Abdeckteil 2b weist im Befestigungsbereich mit der Armaturentafel eine umlaufende Nut 9b auf, welche analog der Nut 9 in Fig. 2 auf die Befestigungsränder 8, 8c aufgesteckt ist. Das andere Ende des Abdeckteils 2b ist mit einem umlaufenden, etwa senkrecht abgebogenen Rand 8d versehen, welchen die schalenförmig ausgebildeten Verkleidungsteile 3, 3a mit den Rändern 8a, 8b umgreifen. Bei der axialen Verstellung der Lenksäule verändert sich die Position der Verkleidungsteile 3, 3a gegenüber dem Abdeckteil 2b, wobei sich die Ränder 8a, 8b entlang eines Verstellbereiches 10b verschieben.

Die Montage der Verkleidung nach Fig. 4 erfolgt auf ähnliche Weise wie die Montage der Verkleidung gemäß Fig. 2. Dabei werden zunächst das Abdeckteil 2b an der Aussparung 6 und danach das Halteteil 4 sowie das Gehäuse 13 für Anzeigeinstrumente 5 montiert. Anschließend werden die schalenförmigen Verkleidungsteile 3, 3a mit der Lenksäule verbunden.

## Patentansprüche

1. Verkleidung einer verstellbaren Lenksäule eines Kraftfahrzeuges mit einem flexiblen Abdeckteil (2; 2a; 2b) für einen veränderlichen Spalt zwischen der Lenksäule bzw. einem damit verbundenen Verkleidungsteil (3, 3a) und einer gegenüberliegenden Armaturentafel (1) des Kraftfahrzeuges, wobei das Abdeckteil in sich formstabil ausgebildet und an der Armaturentafel und/oder einem mit dieser verbundenen Halteteil (4) für Anzeigeinstrumente (5) befestigt ist, **dadurch gekennzeichnet, daß** die Verkleidung zwei schalenförmige, die Lenksäule umschließende Verkleidungsteile (3, 3a) aufweist, welche lösbar mit dem zumindest an der Armaturentafel (1) lösbar befestigten Abdeckteil (2; 2a; 2b) verbunden sind.

2. Verkleidung nach Anspruch 1, **dadurch gekennzeichnet, daß** das Abdeckteil (2; 2a; 2b) mit seinen Rändern an die jeweilige Kontur der Armaturentafel (1) und/oder des Halteteils (4) sowie des Verkleidungsteils (3, 3a) angepaßt ist, wobei die Ränder steifer als der dazwischen liegende Bereich ausgebildet sind.

3. Verkleidung nach Anspruch 1 oder 2, **dadurch gekennzeichnet, daß** die lösbare Befestigung des Abdeckteils (2; 2a; 2b) zumindest an der Armaturentafel (1) durch form- und/oder kraftschlüssig ineinandergreifende Mittel, vorzugsweise Rastmittel, gebildet ist.

4. Verkleidung nach Anspruch 3, **dadurch gekennzeichnet, daß** die Mittel durch zumindest eine umlaufende oder bereichsweise am Abdeckteil (2; 2a; 2b) angeordnete U-förmige Nut (9, 9a; 9b) mit elastischen Schenkeln gebildet sind, welche zumindest auf die Befestigungsränder (8, 8c) einer Aussparung (6) an der Armaturentafel (1) selbsthaftend oder rastend aufsteckbar ist.

5. Verkleidung nach Anspruch 4, **dadurch gekennzeichnet, daß** die Ränder des Abdeckteils (2; 2a; 2b) zumindest bereichsweise mit einer wulstartigen Verdickung ausgebildet sind und sich die Nut (9, 9a; 9b) in dieser Verdickung befindet.

6. Verkleidung nach Anspruch 4 oder 5, **dadurch gekennzeichnet, daß** die Ränder des Abdeckteils (2; 2a; 2b) zur Verstärkung mit einer Einlage aus Kunststoff oder Metall ausgebildet sind.

7. Verkleidung nach Anspruch 3 oder 4, **dadurch gekennzeichnet, daß** sich die Nut (9, 9a) in einer mit dem elastischen Bereich (10; 10a) des Abdeckteils (2; 2a) verbundenen Profilleiste (11, 11a) befindet.

8. Verkleidung nach einem der Ansprüche 1 bis 7, **dadurch gekennzeichnet, daß** der zwischen den Rändern des Abdeckteils (2; 2a) liegende flexible Bereich (10; 10a) als Faltenbalg (12) ausgebildet ist.

9. Verkleidung nach einem der Ansprüche 1 bis 8, **dadurch gekennzeichnet, daß** die schalenförmige Verkleidungsteile (3, 3a) in die Nut (9a) des Abdeckteils (2; 2a) bzw. der Profilleiste (11a) einsteckbar sind.

10. Verkleidung nach einem der Ansprüche 1 bis 5, **dadurch gekennzeichnet, daß** das Abdeckteil (2b) mit einem sich in axialer Richtung der Lenksäule erstreckenden Verstellbereich (10b) und einem daran anschließenden, etwa senkrecht abgebogenen Rand (8d) ausgebildet ist, welchen die schalenförmigen Verkleidungsteile im befestigten Zustand umgreifen.

11. Verkleidung nach einem der Ansprüche 1 bis 10, **dadurch gekennzeichnet, daß** die Aussparung (6) an der Armaturentafel (1) zu einer Seite hin offen ausgebildet und das Abdeckteil (2; 2a; 2b) von dieser Seite her auf die Befestigungsränder (8, 8c) der Aussparung (6) aufsteckbar ist.

12. Verkleidung nach Anspruch 11, **dadurch gekennzeichnet, daß** die offene Seite der Aussparung (6) durch das Halteteil (4) für Anzeigeinstrumente (5) verschlossen ist, wobei am Halteteil (4) ein Befestigungsrand (8c) zur lösbaren Verbindung mit dem Abdeckteil (2; 2a; 2b) vorgesehen ist.

## Claims

1. Shroud of an adjustable steering column of a motor vehicle, with a flexible cover portion (2; 2a; 2b) for a variable gap between the steering column or a shroud portion (3, 3a) connected thereto and an opposed instrument panel (1) of the vehicle, wherein the cover portion is inherently dimensionally stable and is attached to the instrument panel and/or a holding portion (4) for indicator instruments (5) connected thereto,
**characterised in that** the shroud comprises two shell-like shroud portions (3, 3a) which surround the steering column and which are releasably connected to the cover portion (2; 2a, 2b) which is at least releasably attached to the instrument panel (1).

2. Shroud according to claim 1, **characterised in that** the cover portion (2; 2a; 2b) is adapted with its edges to the respective contour of the instrument panel (1) and/or the holding portion (4) as well as the shroud portion (3, 3a), wherein the edges are stiffer than the region in between.

3. Shroud according to claim 1 or 2, **characterised in that** the releasable attachment of the cover portion (2; 2a; 2b) at least to the instrument panel (1) is formed by means interlocking with each other in form-locking and/or force-locking relationship, preferably latch means.

4. Shroud according to claim 3, **characterised in that** the means are formed by at least one U-shaped groove (9, 9a; 9b) with resilient arms which is peripheral or arranged in the cover portion (2; 2a; 2b) in some regions and which can be fitted in self-sticking or latching fashion at least on the fixing edges (8, 8c) of a recess (6) in the instrument panel (1).

5. Shroud according to claim 4, **characterised in that** the edges of the cover portion (2; 2a, 2b) at least in some regions are constructed with a bead-like thickened portion and the groove (9, 9a; 9b) is located in this thickened portion.

6. Shroud according to claim 4 or 5, **characterised in that** the edges of the cover portion (2; 2a; 2b) are constructed with a plastic or metal inlay for reinforcement.

7. Shroud according to claim 3 or 4, **characterised in that** the groove (9, 9a) is located in a profile strip (11, 11a) connected to the resilient region (10; 10a) of the cover portion (2; 2a).

8. Shroud according to any of claims 1 to 7, **characterised in that** the flexible region (10; 10a) located between the edges of the cover portion (2; 2a) is constructed as a concertina.

9. Shroud according to any of claims 1 to 8, **characterised in that** the shell-like shroud portions (3, 3a) can be inserted in the groove (9a) of the cover portion (2; 2a) or profile strip (11a).

10. Shroud according to any of claims 1 to 5, **characterised in that** the cover portion (2b) is constructed with an adjustment region (10b) extending in the axial direction of the steering column and an adjoining, roughly perpendicularly bent edge (8d) which is encompassed by the shell-like shroud portions in the mounted state.

11. Shroud according to any of claims 1 to 10, **characterised in that** the recess (6) opens to one side in the instrument panel (1) and the cover portion (2; 2a; 2b) can be fitted from this side on the fixing edges (8, 8c) of the recess (6).

12. Shroud according to claim 11, **characterised in that** the open side of the recess (6) is closed by the holding portion (4) for indicator instruments (5), wherein on the holding portion (4) is provided a fixing edge (8c) for releasable connection to the cover portion (2; 2a; 2b).

## Revendications

1. Habillage pour une colonne de direction réglable d'un véhicule, comportant un élément de couverture (2; 2a; 2b) flexible pour un espace variable entre la colonne de direction ou un élément d'habillage (3; 3a) lié à celle-ci et une planche de bord (1) du véhicule disposée en vis-à-vis, l'élément de couverture étant intrinsèquemet indéformable et étant fixé à la planche de bord et/ou à un élément de support (4) pour des instruments indicateurs (5) lié à celle-ci, **caractérisé en ce que** l'habillage comprend deux éléments d'habillage (3, 3a) en forme de coque, qui entourent la colonne de direction et sont liés de manière séparable à l'élément de couverture (2; 2a; 2b) fixé de manière démontable au moins à la planche de bord (1).

2. Habillage selon la revendication 1, **caractérisé en ce que** l'élément de couverture (2; 2a; 2b), au niveau de ses bords, est adapté au contour concerné de la planche de bord (1) et/ou de l'élément de support (4) ainsi que de l'élément d'habillage (3, 3a), les bords présentant une rigidité plus grande que la zone située entre ceux-ci.

3. Habillage selon la revendication 1 ou 2, **caractérisé en ce que** la fixation séparable de l'élément de couverture (2; 2a; 2b), au moins au niveau de la planche de bord (1), est formée de moyens qui s'interpénètrent par complémentarité de formes et/ou par adhérence, de préférence de moyens d'encliquetage.

4. Habillage selon la revendication 3, **caractérisé en ce que** les moyens sont formés d'au moins une rainure en U (9; 9a; 9b) continue ou partielle pourvue de flancs élastiques sur l'élément de couverture (2; 2a; 2b), qui peut être enfichée par adhérence ou par encliquetage, au moins sur les bords de fixation (8; 8c) d'une échancrure (6) de la planche de bord (1).

5. Habillage selon la revendication 4, **caractérisé en ce que** les bords de l'élément de couverture (2; 2a; 2b) sont pourvus au moins localement d'un renflement en forme de bourrelet et que la rainure (9; 9a; 9b) est située dans ledit renflement.

6. Habillage selon la revendication 4 ou 5, **caractérisé en ce que** les bords de l'élément de couverture (2; 2a; 2b) sont pourvus d'un renfort en matière plastique ou en métal à des fins de renforcement.

7. Habillage selon la revendication 3 ou 4, **caractérisé en ce que** la rainure (9; 9a) est située dans une baguette profilée (11, 11a), qui est liée à la partie élastique (10, 10a) de l'élément de couverture (2; 2a).

8. Habillage selon une des revendications 1 à 7, **caractérisé en ce que** la zone flexible (10; 10a) située entre les bords de l'élément de couverture (2; 2a) est conformée en soufflet (12).

9. Habillage selon une des revendications 1 à 8, **caractérisé en ce que** les éléments d'habillage (3, 3a) en forme de coque peuvent être enfichés dans la rainure (9a) de l'élément de couverture (2; 2a) ou de la baguette profilée (11a).

10. Habillage selon une des revendications 1 à 5, **caractérisé en ce que** l'élément de couverture (2b) est pourvu d'une partie de réglage (10b) qui s'étend dans la direction axiale de la colonne de direction et d'un bord (8d) consécutif plié sensiblement à angle droit, qui est entouré par les élément d'habillage en forme de coque à l'état monté.

11. Habillage selon une des revendications 1 à 10, **caractérisé en ce que** l'échancrure (6) dans la planche de bord (1) est ouverte en direction d'un côté et que l'élément de couverture (2; 2a; 2b) peut être enfiché de ce côté sur les bords de fixation (8, 8c) de l'échancrure (6).

12. Habillage selon la revendication 11, **caractérisé en ce que** le côté ouvert de l'échancrure (6) est obturé par l'élément de support (4) pour des instruments d'affichage (5), un bord de fixation (8c) étant prévu sur l'élément de support (4) pour la fixation séparable avec l'élément de couverture (2; 2a; 2b).
